# EUROPEAN PATENT SPECIFICATION

(11) **EP 3 088 786 B1**
(45) Date of publication and mention of the grant of the patent: **20.09.2023**
(21) Application number: 16166369.5
(22) Date of filing: 21.04.2016
(51) Int. Cl.: F16L 9/00, H02G 9/06

(54) **MODULAR MULTIPLE DUCTING SYSTEM**
MODULARES MEHRFACHLEITUNGSSYSTEM
SYSTÈME À CONDUITS MULTIPLES MODULAIRE

(30) Priority: 27.04.2015 GB 201507146
(43) Date of publication of application: 02.11.2016
(73) Proprietor: Polypipe Limited, Doncaster, Yorkshire DN12 1ES (GB)
(72) Inventor: RAMELLA, Stuart Edward Alan, Leicestershire LE11 1LE (GB); NESS, Chris, Nottinghamshire NG5 4GW (GB)
(74) Representative: Marks & Clerk LLP

(56) References cited:
- EP-A1- 0 194 228
- EP-A1- 2 725 670
- EP-A2- 3 035 470
- WO-A1-2011/130000
- WO-A2-2005/045294
- CN-U- 202 442 005
- US-A- 681 158
- US-A- 3 148 477
- US-A- 3 693 664
- US-A- 5 832 960
- US-A- 6 050 044

## Description

### Field of the Invention

This invention relates to a conduit ducting system, comprising a plurality of conduit ducts, for housing cables.

### Background

Conduit ducting systems provide protection to electrical cables. This is particularly important in situations when cables run underground, for example in railway applications (including under track crossings), highway applications (including under road crossings), and in catchpit chambers.

Various conduit ducting systems which include a plurality of conduit ducts are currently on the market. Conduit ducts of this type allow cables of the same type to be grouped together through the conduit duct, simplifying cable installation. Additionally, having a plurality of conduit ducts within a larger casing improves the structural performance of the conduit ducting system, when compared to a single conduit duct of the same diameter as the casing.

Conduit ducts which provide a structure allowing to interconnect ducts of similar type side by side are known from US3693664A and from US5832960A.

### Statement of Invention

According to the invention, there is provided a conduit duct according to claim 1.

An advantage of the first aspect is that multiple conduit ducts can be connected together to give a conduit ducting system comprising any number of conduit ducts. A further advantage associated with each of these features is that the conduit ducts are easier to connect together. A further advantage is that on connection, the connected conduit ducts are at the same longitudinal position. A further advantage is that conduit ducts can be connected in a second direction, increasing the number of possible connection combinations. A further advantage is that structural rigidity is provided to the conduit duct. A further advantage is that the conduit ducts are easier to connect together.

In an embodiment, the sliding direction is substantially perpendicular to the longitudinal direction. This makes the conduit ducts easier to connect as the sliding distance for connection is minimised.

In an embodiment, each of the first and second series of dovetail connectors has a height substantially equal to a height of the first and second faces, the heights measured in a direction perpendicular to the longitudinal direction. This improves the security of the connection.

In an embodiment, the conduit duct is connectable to the adjacent conduit duct by the third and fourth connection means so that the conduit duct and the adjacent conduit duct are at the same lateral position. This provides greater flexibility.

In an embodiment, on connection of the conduit duct to the adjacent conduit duct by the third and fourth connection means, the first and second connection means of the conduit duct are continuous with the first and second connection means of the adjacent conduit duct. This means that multiple conduit ducts which are connected via their third and fourth connection means can be more readily connected to further conduit duct by their first or second connection means.

In an embodiment, the conduit duct is connectable to the adjacent conduit duct by the third and fourth connection means so that the conduit duct and the adjacent conduit duct are offset in a lateral direction by an offset distance.

In an embodiment, the offset distance is substantially equal to half of a width of the conduit duct.

In an embodiment, the fourth connection means comprises a series of projections, and the third connection means comprises a series of apertures to receive the projections of the fourth connection means of the adjacent conduit duct.

In an embodiment, the fourth connection means comprises at least one first half projection located on at least one tail of the first connection means, and the fourth connection means comprises at least one second half projection located on at least one pin of the second connection means, the at least one pin of the second connection means being at the same longitudinal position as the at least one tail of the first connection means, wherein on connection of the conduit duct to the adjacent conduit duct by the first and second connection means, at least one projection of the fourth connection means is formed by the at least one first half projection and the at least one second half projection.

In an embodiment, the third connection means comprises at least one first notch located on the at least one tail of the first connection means, and the third connection means comprises at least one second notch located on the at least one pin of the second connection means, wherein on connection of the conduit duct to the adjacent conduit duct by the first and second connection means, at least one hole of the third connection means is formed by the at least one first notch and the at least one second notch.

In an embodiment, the fourth connection means is formed by the lateral ribs. This simplifies the manufacture of the conduit duct.

In an embodiment, the third connection means is formed by the lateral ribs. This simplifies the manufacture of the conduit duct.

In an embodiment, the conduit duct has a substantially square cross-section.

In an embodiment, the conduit duct has a substantially rectangular cross-section. In an embodiment, a width of the third and fourth faces is substantially half of the height of the first and second faces, the width and the height measured in directions perpendicular to the longitudinal direction. In an embodiment, the first connection means is further configured to interlock with the second connection means of two conduit ducts having a substantially square cross-section.

In an embodiment, the conduit duct comprises partitioning means which divides the duct into two ducts, and the conduit duct is a double conduit duct. This means that the cables which are housed within the conduit duct can be sub-divided.

In an embodiment, the partitioning means is substantially planar and parallel to the third and fourth faces, and divides the duct into two ducts of substantially equal dimensions.

In an embodiment, the conduit duct comprises a first end and a second end, the first end comprising a first end connector and the second end comprising a second end connector, wherein the second end connector is receivable by a first end connector of the adjacent conduit duct. This means that the overall length of the conduit duct can be increased by connecting multiple ducts together.

In an embodiment, the first end connector is a socket and the second end connector is a spigot. This provides a simple means by which conduit ducts may be connected longitudinally.

In an embodiment, the spigot comprises a clip and the socket comprises a hole, the clip of the conduit duct receivable by the hole of the adjacent conduit duct.

In an embodiment, a shape of the conduit duct is substantially cuboidal. In an embodiment, an internal surface of the conduit duct has rounded edges. This provides damage to cables when pulling them through the conduit duct.

In an embodiment, each pin of the first and second connection means comprises a leading face, and the leading face of at least one of the pins comprises a series of cut-outs. This simplifies the manufacture of the conduit duct, as shorter cores may be used in the tool which forms the tails for the dovetail connectors.

In an embodiment, the cut-outs have a substantially rectangular shape. This strengthens the pins of the dovetail connectors.

In a related aspect not according to the invention, there is provided a conduit ducting system, comprising a plurality of casing components, connection means, and partitioning means, said connection means being configured to connect said casing components together to form a casing duct, said casing duct having a casing duct axial length, with at least one of said casing components having a length equal to said casing duct axial length, and said partitioning means being configured to divide said casing duct into a plurality of conduit ducts.

Examples of the above conduit ducting system have the advantage that standard casing components can be connected together in different combinations to give casing ducts of different diameters, cross sections and internal partitioning layouts. This simplifies the manufacture of the conduit ducting systems as fewer different components need to be produced. In addition to this, the casing components can be stacked and shipped, before being connected together on site. This reduces the volume required to ship the conduit ducting system.

The partitioning means may comprise a plurality of dividers and spacers. This has the advantage that standard dividers and spacers can be used in different combinations to give different numbers and dimensions of conduit ducts within the casing. Again, this simplifies the manufacture of the conduit ducting system. The spacers and dividers may also be shipped flat and assembled on site.

The conduit ducting system may be connected to an adjacent conduit ducting system, allowing conduit ducting systems of varying lengths to be produced from the same parts. The conduit ducts may further comprise a socket end and a spigot end to allow the conduit ducting systems to be connected detachably to an adjacent conduit ducting system. The socket and spigot end may include chamfered edges to provide a smooth transition between conduit ducts, ensuring cables are not damaged when pulled through the conduit ducts.

The spacers and dividers may extend to the inner surface of the casing duct, allowing them to form complete conduit ducts to house the cables, and giving structural rigidity to the casing duct. The spacers and dividers may be of the same length as the casing duct. This allows the full length of the casing duct to be used for the conduit ducts and means that when the conduit duct is connected to an adjacent conduit duct (as is described in the previous paragraph), the spacers and dividers of the first conduit ducting system abut the spacers and dividers of the connected conduit ducting system, forming longer conduit ducts.

The casing duct may include grooves to receive the spacers and dividers. This allows the lateral position of the spacers and dividers to be fixed but provides for easy removal of the spacers and dividers. The grooves may be located at a connection between casing components, allowing easy assembly, as the spacer or divider may be inserted into the grooves before the casing components are connected to each other.

Each spacer may receive at least one pair of dividers, with one divider of each pair located on a first side of the spacer and the other divider of each pair located on a second side of the spacer. This allows the casing duct to be partitioned into approximately equally sized conduit ducts. Each spacer may include a series of apertures to allow the or each pair of dividers to engage with each other through the spacer. This gives structural rigidity to the system. Each divider may include a series of teeth to allow the dividers to detachably interlock with each other through the spacer apertures. Each divider tooth may include an angled leading face and an angled receiving face, with the leading face of one tooth interlocking with the receiving face of another, preventing rotation of the dividers within the conduit duct.

The spacers and dividers may be planar, with the spacers perpendicular to the dividers. This gives structural rigidity to the conduit ducting system and means that conduit ducts may be of substantially equal size.

The casing components may comprise a pair of hemicylindrical casing components, with the partitioning means comprising a spacer and a pair of dividers.

The casing components may comprise a pair of hemicylindrical casing components and a pair of planar components, with the partitioning means comprising two spacers and three dividers, one of the dividers including two series of teeth.

The casing components may comprise a pair of hemicylindrical casing components and a plurality of pairs of planar components, with the partitioning means comprising at least three spacers and at least four dividers, at least two of the dividers including two series of teeth. This arrangement of hemicylindrical and planar casing components gives flexibility in the number of conduit ducts in the conduit ducting system. Additionally, the planar casing components may be shipped flat, and the hemicylindrical casing components may be nested during shipping.

The connection means may comprise a series of clips to allow secure, detachable connection between casing components.

The outer surface of the casing duct may include laterally and longitudinally extending ribs to give structural rigidity to the conduit ducting system. The inner surface of the casing duct may be smooth to allow efficient pulling of cables through the conduit ducts.

The conduit ducting system may be configured for use in an under track crossing, an under road crossing, or in a catchpit chamber.

It will be appreciated that the above features may be taken in various combinations to give different embodiments of the present invention.

### Brief Description of the Drawings

Figures 1-8 are not according to the invention and are present for illustration purposes only.
Figure 1 is a view of a 2x2 conduit ducting system.
Figure 2 is an exploded view of the 2x2 conduit ducting system.
Figure 3 is an exploded view of casing duct connection means.
Figure 4 is a view of casing duct connection means.
Figure 5 is an exploded view of the partition wall teeth.
Figure 6a is a close-up view of the partition wall teeth.
Figure 6b is a close-up view of a pair of partition wall teeth in their engaged position.
Figure 7 is a view of a 3x2 conduit ducting system.
Figure 8 is an exploded view of the 3x2 conduit ducting system.
Figure 9 is a perspective view of a conduit duct.
Figure 10 is a close-up perspective view of first and second connection means.
Figure 11 is a close-up top view of first and second connection means.
Figure 12 is a top view of a conduit duct.
Figure 13 is a close-up perspective view of end connectors.
Figure 14 is a perspective view of a conduit ducting system.
Figure 15 is a perspective view of a double conduit duct.
Figure 16 is an end view of a second conduit ducting system.
Figure 17 is a perspective view of a third conduit ducting system.
Figure 18 is a perspective view of a fourth conduit ducting system.
Figure 19 is a close up perspective view of third connection means.
Figure 20 is a perspective view of a fifth conduit ducting system.

### Specific Description

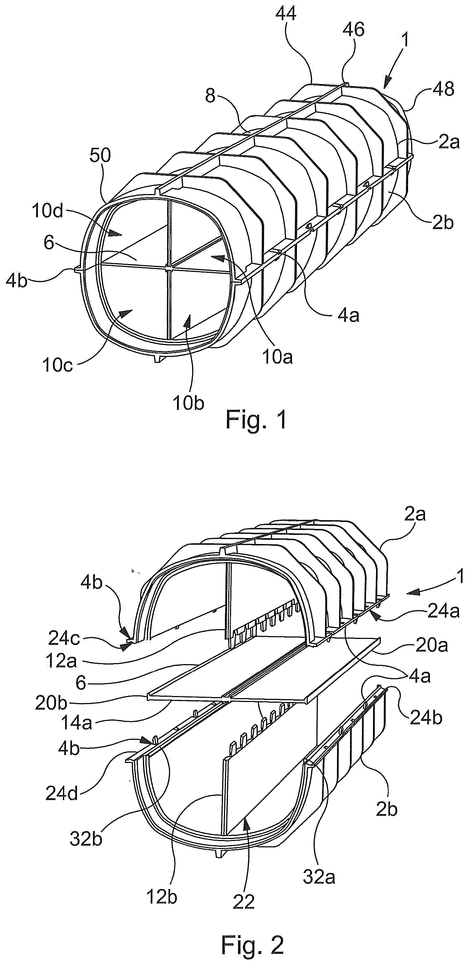

The following examples described with relation to Figures 1-8 are not according to the invention and are present for illustration purposes only.

Figure 1 shows a conduit ducting system (1), comprising a plurality of casing components (2a)(2b), connection means (4a) and partitioning means (6), said connection means connecting said casing components together to form a casing duct (8), said casing duct having a casing duct axial length, with at least one of said casing components having a length equal to said casing duct axial length, and said partitioning means dividing said casing duct into a plurality of conduit ducts (10a)-(10d).

Referring to figure 2, there is shown a conduit ducting system, which includes two substantially hemicylindrical casing components (2a)(2b), a pair of connection means (4a)(4b) and partitioning means (6). The partitioning means (6) includes two substantially planar dividers (12a)(12b) and a substantially planar spacer (14a), the spacers and dividers having a length equal to the casing duct axial length. The dividers (12a)(12b) are substantially perpendicular to the spacer (14a). Each of the hemicylindrical casing components (2a)(2b) includes a longitudinally extending divider groove (22) (only one is shown on figure 2). The connection means (4a)(4b) connects the hemicylindrical casing components (2a)(2b) together to form a casing duct (8). Spacer (14a) includes a pair of longitudinally extending spacer edges (20a)(20b), each of the spacer edges extending to an inner surface of the casing duct (8). Each of the dividers (12a)(12b) extends from the spacer (14a) to an inner surface of the casing duct (8).

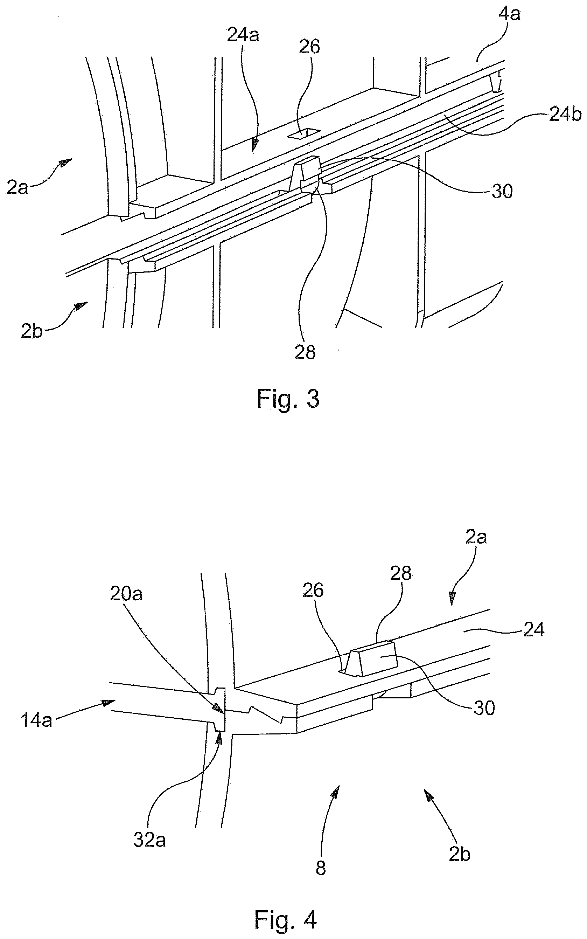

Referring to figure 3, there is shown a close-up view of the connection means (4a. Each hemicylindrical casing component (2a)(2b) includes two connection faces (24a)-(24d) located along the longitudinally extending edges of the hemicylindrical casing component (2a)(2b), each connection face (24a)-(24d) including a series of casing apertures (26) and clips (28). Each of the clips is constructed from a resilient material, and includes a lip (30).

During connection, a clip (28) of one casing component (2b) is received by the casing aperture (26) of an adjacent casing component (2a). The clip (28) deforms as it is inserted into the casing aperture (26), before returning to its original shape when the connection faces (24a)(24b) abut each other. The lip (30) of the clip (28) of one of the casing components (2b) forms a mechanical interlock with the connection face (24) of the other casing component (2a), connecting the hemicylindrical casing components (2a)(2b) to each other. The clip (28) may be readily detached from the casing aperture (26), allowing the hemicylindrical casing components (2a)(2b) to be disconnected from each other when required.

Referring to figure 4, there is shown a close-up view of a portion of the connected casing components (2a)(2b) forming a casing duct (8). The inner surface of casing duct (8) includes a pair of longitudinally extending spacer grooves (32a), at the connection between adjacent casing components (2a)(2b). Each of the spacer grooves (32a) receives one of the longitudinally extending edges (20a) of spacer (14a).

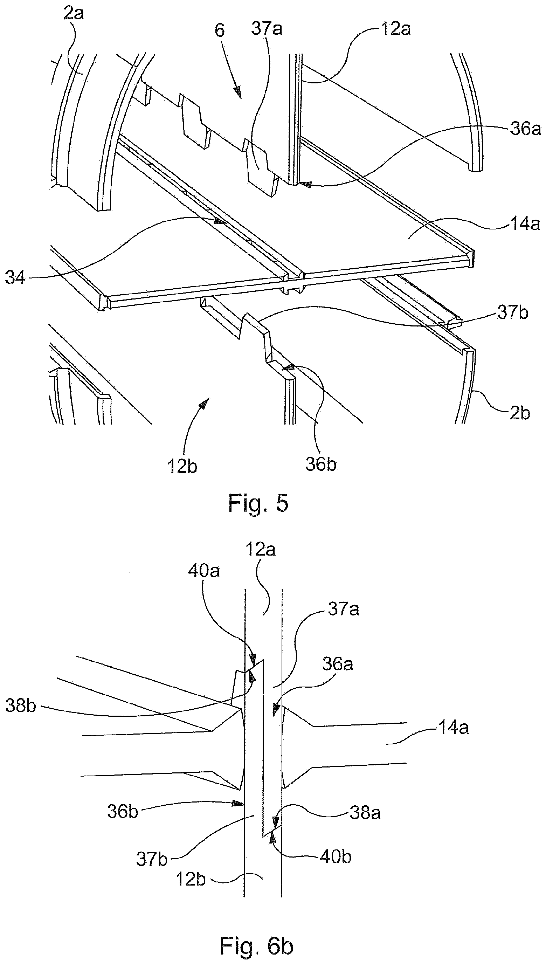

Referring to figure 5, there is shown a close-up view of partitioning means (6), including a substantially planar spacer (14a), which includes a longitudinally extending series of spacer apertures (34) running intermittently and equally spaced along its centreline. The partitioning means (6) further includes a pair of substantially planar dividers (12a)(12b). The series of spacer apertures (34) receives the pair of dividers (12a)(12b), with one divider (12a) on a first side of the spacer (14a) and the other divider (12b) located on a second side of the spacer (14a). Each divider (12a)(12b) includes a series of teeth (36a)(36b) along a first longitudinally extending edge of the divider (12a)(12b). The series of teeth (36a)(36b) of the two of dividers (12a)(12b) are arranged with the same spacing as the series of spacer apertures (34), and are each arranged to engage with each other through the series of spacer apertures (34).

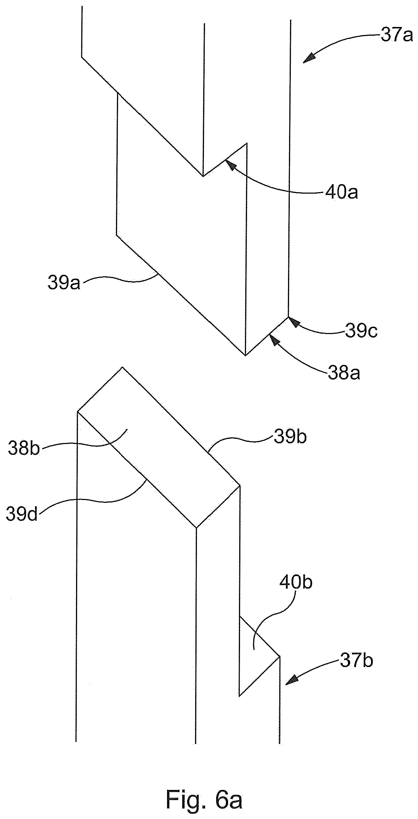

Referring to figure 6a, there is shown a close-up view of a tooth (37a)(37b) of each series of teeth (36a)(36b). Each tooth (37a)(37b) includes a leading face (38a)(38b), laterally adjacent (in the direction normal to the plane of the dividers (12a)(12b)) to a receiving face (40a)(40b). The leading face (38a)(38b) of each tooth (37a)(37b) is closer to the opposing series of teeth (36b)(36a) than the receiving face (40a)(40b).

The two series of teeth (36a)(36b) of the two dividers (12a)(12b) are substantially parallel to each other and are aligned such that each tooth (37a) of the first series of teeth (36a) occupies the same longitudinal position as a tooth (37b) of the second series of teeth (36b), with the leading face (38a) of each tooth of the first series of teeth (36a) at the same lateral position as the receiving face (40b) of the second series of teeth (37b).

The leading face (38a)(38b) of each tooth (37a)(37b) comprises two longitudinally extending tooth edges (39a)(39b)(39c)(39d). The leading face of each tooth (37a)(37b) is angled with respect to the lateral direction such that the longitudinally extending tooth edge (39a)(39b) which is nearer to the receiving face (40a)(40b) is closer to the opposing series of teeth (36b)(36a) than the longitudinally extending tooth edge (39c)(39d) which is further from the receiving face (40a)(40b). In addition to this, the receiving face (40a)(40b) of each tooth (37a)(37b) is angled such that it is parallel to the leading face (38a)(38b).

Referring to figure 6b, there is shown a pair teeth (37a)(37b) in their engaged position. The angled leading faces (38a)(38b) and receiving faces (40a),(40b) described above allow the receiving face (40a)(40b) of a tooth (37a)(37b) to receive the leading face (38b)(38a) of another tooth (37b)(37a). This allows the series of teeth (36a)(36b) to engage with each other through the series of spacer apertures (34) such that rotation of the dividers (12a)(12b) within the casing duct (8) is prevented.

Referring again to figure 2, each casing component (2a)(2b) includes a longitudinally extending divider groove (22a)(22b), to receive a second longitudinally extending edge of a divider (12a)(12b).

Referring again to figure 1, there is shown a fully assembled conduit ducting system (1). In this example, the dividers (12a)(12b) and spacers (14a) are perpendicular to each other and partition the casing duct (8) into four conduit ducts (10a)-(10d). The outer surface of the casing duct (8) comprises laterally extending ribs (44) and longitudinally extending ribs (46) to provide structural rigidity to the conduit ducting system (1). Additionally, in the present example, the casing duct includes a socket end (48) and a spigot end (50), each arranged at opposing longitudinal ends, with chamfered edges. Alternatively, casing ducts may each have two spigots or two sockets, arranged at opposing ends of the casing duct. The socket end (48) and spigot end (50) allow the conduit ducting system (1) to be detachably connected to an adjacent conduit ducting system to form a longer casing duct (8). The inner surface of casing duct (8) is smooth.

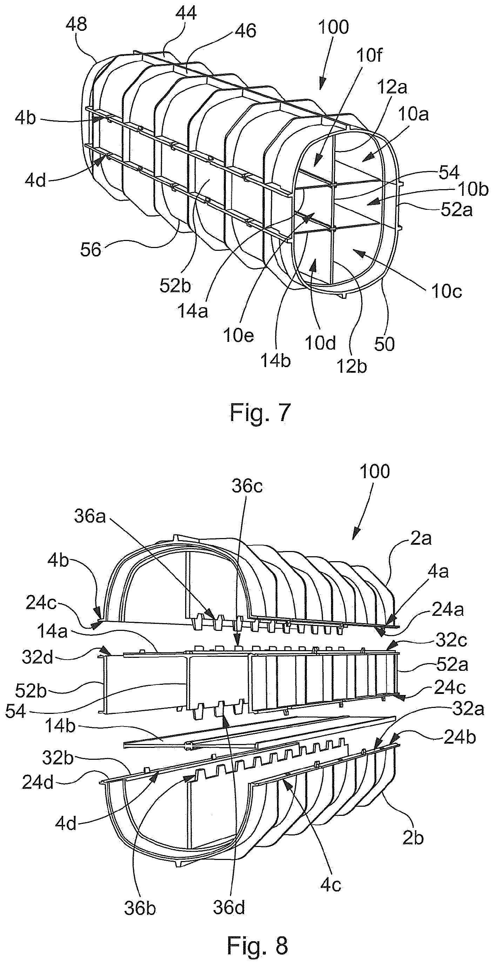

Referring to figure 7, there is shown a conduit ducting system (100). The conduit ducting system of the second example (100) includes all of the features of the conduit ducting system of the first example (1). Similar features will be referenced with the same reference numerals as above and function as described as above, so only the differences will be described in detail. Additionally, the conduit ducting system (100) includes a pair of substantially planar casing components (52a)(52b) connected in between the hemispherical casing components (2a)(2b), a second spacer (14b), a third divider (54) and a second pair of connection means (4c)(4d).

Referring to figure 8, there is shown an exploded view of a conduit ducting system (100). Each of the substantially planar casing components (52a)(52b) includes two connection faces (24e)-(24h) located along the longitudinally extending edges of the planar casing component (52a)(52b). The connection faces (24e)-(24h) of the substantially planar casing components (52a)(52b) include the same features as the connection faces (24a)-(24d) of the hemicylindrical casing components (2a)(2b). They allow the substantially planar casing components (52a)(52b) to be connected to the hemicylindrical components (2a)(2b) in the same manner as described above with respect to figure 3, to form a casing duct (56) with an oblong cross section.

The casing duct (56) includes two pairs of longitudinally extending spacer grooves (32a)(32b)(32c)(32d), at each of the connections between adjacent hemispherical (2a)(2b) and planar casing components (52a)(52b). As in the first example, each of these pairs of spacer grooves (32a)(32b) receives a pair of longitudinally extending edges of a spacer (14a). Again, as in the first example, each of the spacers (14a) includes a series of spacer apertures (34) to receive a pair of dividers (12a)(12b). However, in the present example, the third divider (54), which is between the two spacers (14a) perpendicularly thereto, includes two series of teeth (36c)(36d), to allow it to engage with the other two dividers (12a)(12b).

Referring again to figure 7, there is shown a fully assembled conduit ducting system (100). The dividers (12a)(12b)(54) and spacers (14a)(14b) partition the casing duct (56) into six conduit ducts (10a)-(10f).

It will be appreciated that further examples may include more than one pair of substantially planar casing components (52a)(52b), more than two spacers (14a)(14b) and more than three dividers (12a)(12b)(54). In additional further examples, any of the examples described may be adapted for use in under track crossings, under road crossings, or catchpit chambers.

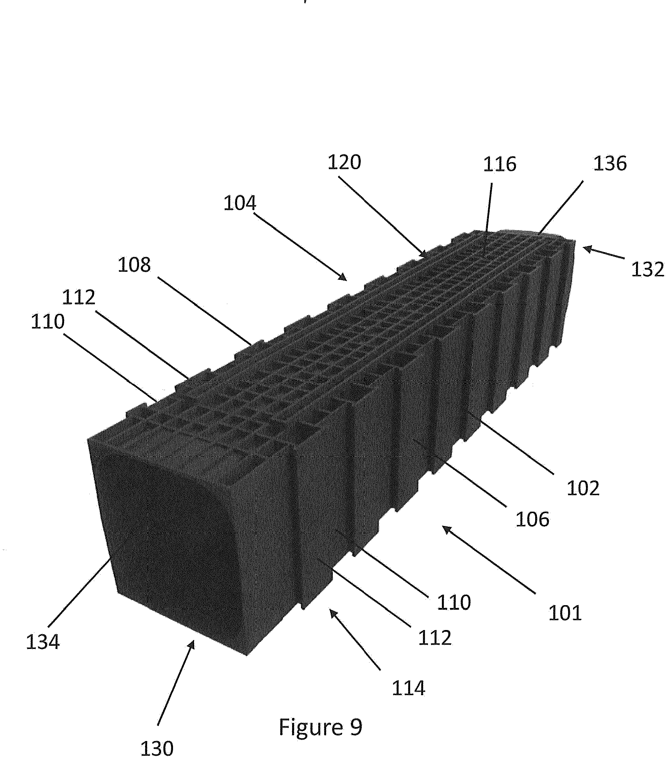

Referring to figure 9, there is shown a perspective view of a conduit duct (101). The conduit duct (101) has a substantially cuboidal shape. The conduit duct (101) is rigid. The conduit duct (101) has an internal surface with rounded edges.

The conduit duct (101) comprises a first face (102) and a second face (104). The first face (102) and second face (104) are to the conduit duct (101). The first face (102) extends in a longitudinal direction, which is substantially parallel to a central axis of the conduit duct (101). The second face (104) is substantially parallel to and opposite the first face (102). Each of the first face (102) and the second face (104) is substantially planar. Preferably, in use, the first face (102) and the second face (104) are in substantially vertical planes.

The conduit duct (101) comprises a third face (114) and a fourth face (116). The third face (114) extends in the longitudinal direction. The fourth face (116) is substantially parallel to and opposite the third face (114). Each of the third face (114) and fourth face (116) is substantially planar. Preferably, in use, the third face (114) and fourth face (116) are in substantially horizontal planes.

The third face (114) and fourth face (116) are substantially perpendicular to the first face (102) and second face (104). The conduit duct (101) has a substantially square cross-section. This means that the shape of the edges defined by the first, second, third and fourth faces (102)(104)(114)(116) of the conduit duct (101) is substantially square in a cross-section taken at an intersection between the conduit duct (101) and a plane which is perpendicular to the first, second, third and fourth faces (102)(104)(114)(116). The third and fourth faces (114)(116) are opposed and each extend between opposite respective edges of the first and second faces (102)(104).

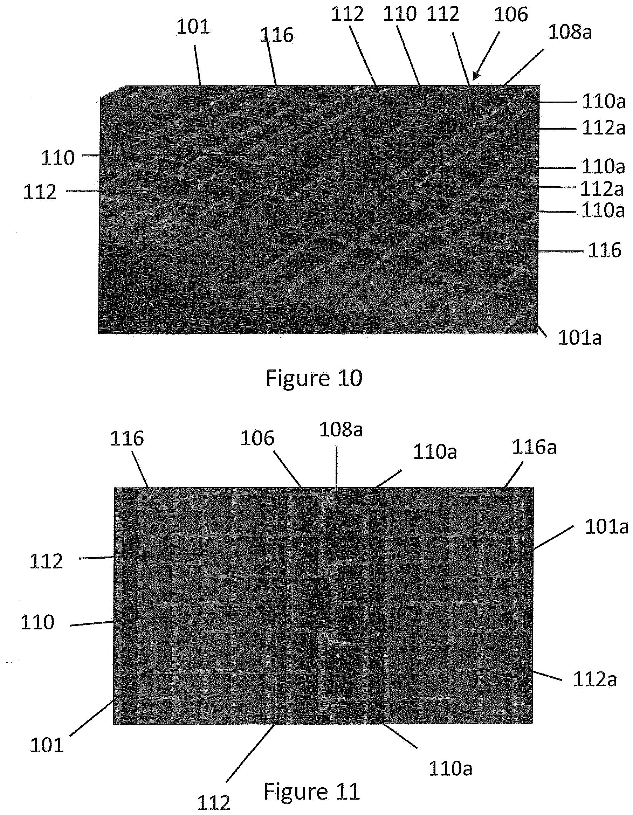

The first face (104) comprises first connection means (106). The second face (102) comprises second connection means (108). The first connection means (106) is configured to interlock with the second connection means (108a of Figure 10 and Figure 11) of an identical adjacent conduit duct (101a of Figure 10 and Figure 11). The first connection means (106) and second connection means (108) are described in more detail below with respect to Figure 10 and Figure 11.

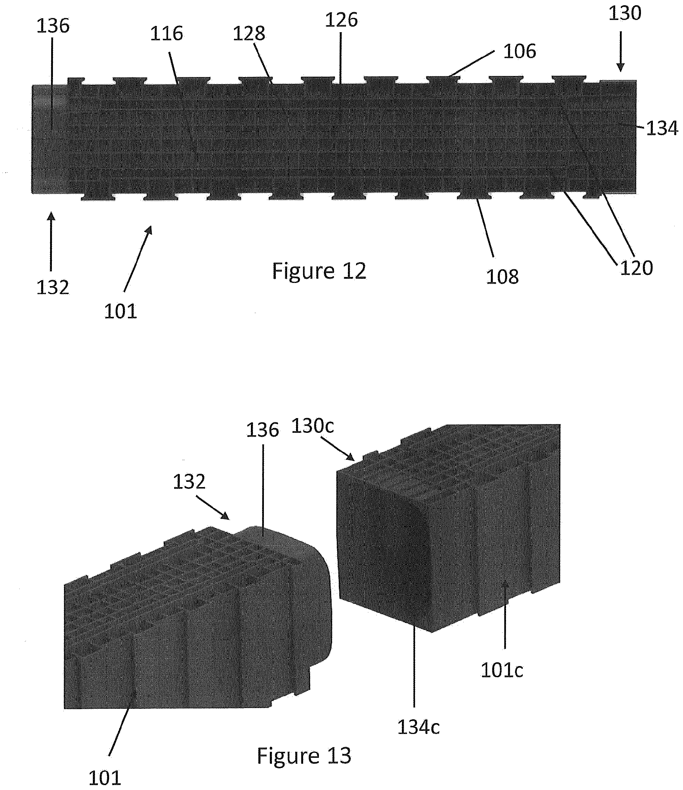

The third face (114) comprises third connection means (118). The fourth face (116) comprises fourth connection means (120). The fourth connection means (120) is configured to receive the third connection means of an identical adjacent conduit duct. The third connection means (118) and the fourth connection means (120) are described below with respect to Figure 12.

The conduit duct (101) comprises a first end (130) and a second end (132). The first end (130) comprises a first end connector (134). The second end (132) comprises a second end connector (136). The second end connector (136) is receivable by the first end connector (134c in Figure 13) of an identical adjacent conduit duct (101c in Figure 13). The first end connector (134) and the second end connector (136) are described below with respect to Figure 13.

The conduit duct (101) is used to house cables. In use, the cables run in the longitudinal direction through the first end (130), the central portion of the conduit duct (101) and the second end (132).

Referring to Figure 10 and Figure 11, there are shown close-up perspective and top views of first connection means (106) interlocking with second connection means (108a) of an identical adjacent conduit duct (101a).

The first connection means (106) comprises a first series of dovetail connectors. The second connection means (108)(108a) comprises a second series of dovetail connectors.

The first series of dovetail connectors comprises alternating pins (112) and tails (110). The second series of dovetail connectors comprises alternating pins (112)(112a) and tails (110)(110a). The pins (112) of the first connection means (106) are identical to the pins (112)(112a) of the second connection means (108). The tails (110) of the first connection means are identical to the tails (110)(110a) of the second connection means.

Each of the pins (112)(112a) is a male connector which extends outwardly from the first face (102) or second face (104) of the conduit duct (100). Each of the tails (110)(110a) is a female connector which is a cut-out portion of the first face (102) or second face (104) of the conduit duct. The pins (112)(112a) are complementarily shaped to the tails (110)(110a). This means that each tail (110)(110a) can receive a respective pin (112a)(112), forming an interlocking connection. This is described in more detail below.

Each of the pins (112)(112a) and tails (110) has a constant cross-section in a direction parallel to the first face (102) and perpendicular to the longitudinal direction. Each of the first and second series of dovetail connectors has a height equal to a height of the first face (102) and the second face (104), as measured in the direction parallel to the first face (102) and perpendicular to the longitudinal direction. This is achieved by each of the pins (112)(112a) and tails (110) having a height equal to the height of the first face (102) and the second face (104).

Each of the pins (112)(112a) is shaped such that its width increases outwardly from the first (102) or second face (104). Each of the tails is shaped such that its width decreases outwardly from the first (102) or second face (104). More specifically, in the present embodiment, each of the pins (112)(112a) and tails (110)(110a) has a substantially isosceles trapezium shape. It will be appreciated by the skilled reader that the pins (112)(112a) and tails (110)(110a) may be shaped differently, provided that an interlocking connection can be formed between the first connection means (106) and the second connection means (108a).

The pins (112)(112a) and tails (110)(110a) are complementary, such that the pins (112) of the first connection means (106) are located at the same longitudinal position as the tails (110)(110a) of the second connection means (108)(108a), and the pins (112)(112a) of the second connection means (108)(108a) are located at the same longitudinal position as the tails (110) of the first connections means (108).

In use, the first connection (106) means is connectable to the second connection means (108a) of the adjacent conduit duct (101a) by sliding the conduit duct (101) relative to the adjacent conduit duct (101a) in a sliding direction. The sliding direction is parallel to the first face (102). More specifically, the sliding direction is parallel to the first face (102) and substantially perpendicular to the longitudinal direction.

Each of the tails (110a) receives its corresponding pin (112). Because the pins (112) and tails (110a) are complementary (as described above), following connection, the conduit duct (101) and the adjacent conduit duct (101a) are at the same longitudinal position.

Referring to Figure 12, there is shown a top view of a conduit duct (101). The fourth face (116) of the conduit duct (101) comprises a series of longitudinal ribs (126). The fourth face (116) of the conduit duct (101) comprises a series of lateral ribs (128).

The fourth connection means (120) comprises a pair of substantially rectangular longitudinally extending raised portions. The third connection means (not shown) comprises a pair of recesses to receive the raised portions of the fourth connection means. The fourth connection means (120) is formed within the longitudinal ribs (126) and the lateral ribs (128). The third connection means is at the same longitudinal position as the fourth connection means (120).

The third face (114a) of the conduit duct (101) comprises a series of longitudinal ribs (122). The third face (114) of the conduit duct (101) comprises a series of lateral ribs (124).

In use, the third connection means receives the fourth connection means (120) of an identical adjacent conduit duct (not shown in Figure 12). The fourth connection means (120) receives the third connection means of the adjacent conduit duct by placing the adjacent conduit duct on top of the conduit duct (101).

On connection of the conduit duct (101) to the adjacent conduit duct by the third and fourth connection means, the conduit duct and the adjacent conduit duct are at the same lateral position. On connection of the conduit duct (101) to the adjacent conduit duct by the third and fourth connection means, the conduit duct and the adjacent conduit duct are at the same longitudinal position. On connection of the conduit duct (101) to the adjacent conduit duct by the third and fourth connection means, the first and second connection means of the conduit duct are continuous with the first and second connection means of the adjacent conduit duct.

Referring to Figure 13, there is shown a close-up perspective view of the end connectors of a conduit duct (101) and an identical adjacent conduit duct (101c). Each first end connector (134)(134c) comprises a socket, while each second end connector (136) comprises a spigot. The internal shape of the socket is the same as the shape as the spigot. The internal shape of the socket is a rounded square. The shape of the spigot is a rounded square. The socket and spigot have dimensions substantially equal to those of the cross-section of the conduit duct (101).

In use, the first end connector (134c) of the adjacent conduit duct (101c) receives the second end connector (136) of the conduit duct (101). An interference fit forms between the first end connector (134c) and the second end connector (136). This connects the conduit duct (101) to the adjacent conduit duct (101c) in the longitudinal direction, thereby forming a longer conduit duct.

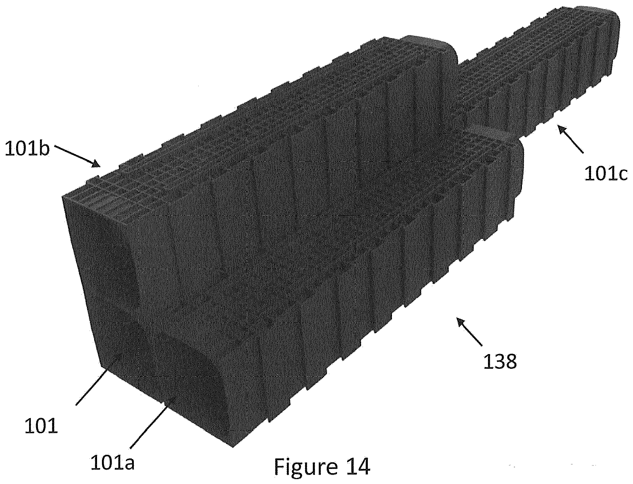

Referring to Figure 14, there is shown a perspective view of a first conduit ducting system (138). The system comprises four identical conduit ducts (101)(101a)(101b)(101c). The first conduit duct (101) is connected to a second conduit duct (101a) by its first connection means (106). The first conduit duct (101) is connected to a third conduit duct (101b) by its fourth connection means (120). The first conduit duct (101) is connected to a fourth conduit duct (101c) by its second end connector (136). It will be appreciated that the first conduit ducting system (138) is exemplary and that infinite combinations of conduit ducts are possible.

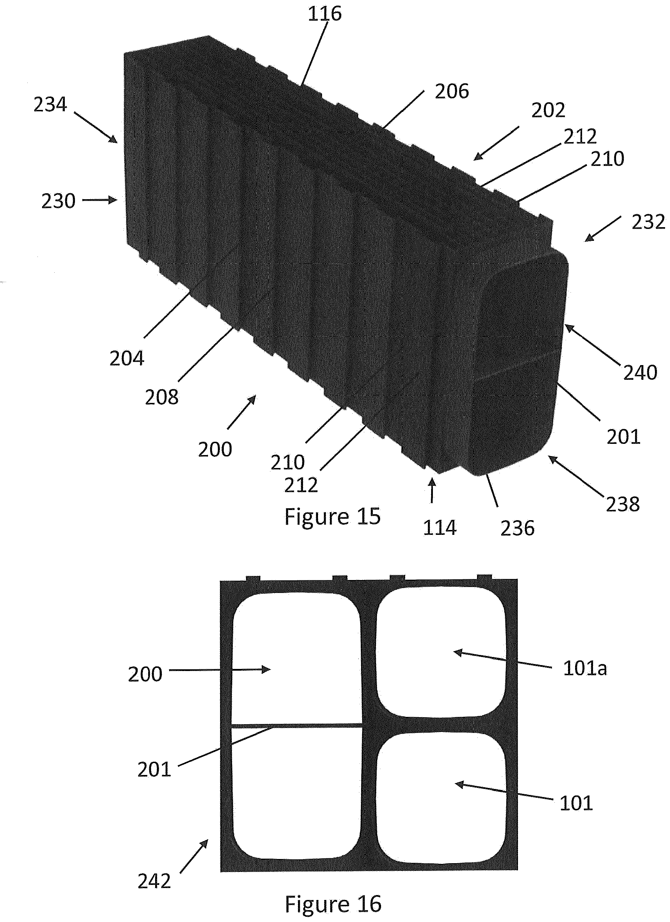

Referring to Figure 15, there is shown a perspective view of a double conduit duct (200). The double conduit duct (200) comprises many of the same features as the conduit duct (101). Only the differences between the double conduit duct (200) and the conduit duct (101) are described here.

The double conduit duct (200) has a substantially rectangular cross-section. This means that the shape defined by the first, second, third and fourth faces (102)(104)(114)(116) of the conduit duct (101) is substantially rectangular in a cross-section taken at an intersection between the conduit duct (101) and a plane which is perpendicular to the first, second, third and fourth faces (102)(104)(114)(116). The width (measured in a direction parallel to the third face (114) and perpendicular to the longitudinal direction) of the third face (114) and the fourth face (116) is equal to half of the height of the first face (202) and the second face (204).

The pins (210) and tails (212) of the first connection means (206) and the second connection means (208) are of height equal to the height of the first face (202) and the second face (204).

The first end (230) comprises a first end connector (234). The second end (232) comprises a second end connector (236). The first end connector (234) and the second end connector (236) have dimensions substantially equal to those of the cross-section of the double conduit duct (200).

The double conduit duct (200) comprises a partitioning means (201) which divides the double conduit duct (200) into two ducts (238)(240). The two ducts (238)(240) have substantially equal dimensions. The two ducts (238)(240) have cross-sectional area similar to that of the conduit duct (101). The partitioning means (201) is substantially planar and parallel to the third face (114) and the fourth face (116).

In use, each of the ducts (238)(240) may be used to house cables. The cables run through the conduit duct (101) in the longitudinal direction.

The first connection means (206) is connectable to the second connection means of an identical adjacent conduit duct by sliding the double conduit duct (200) relative to the adjacent double conduit duct in a sliding direction (described in more detail below).

Additionally, the first connection means (206) is connectable to a conduit duct (101) by sliding the double conduit duct relative to the conduit duct in the sliding direction. Additionally, the first connection means (206) is connectable to a pair of conduit ducts (101) by sliding the double conduit duct relative to the conduit ducts (101) in the sliding direction.

The sliding direction is parallel to the first face (202). More specifically, the sliding direction is parallel to the first face (202) and substantially perpendicular to the longitudinal direction. As will be understood by the skilled person, aside from their increased height, the pins (212) and tails (210) of the double conduit duct (200) function in much the same way as those of the conduit duct (101) described above.

Referring to Figure 16, there is shown an end view of a second conduit ducting system (242), which comprises a double conduit duct (200) and a pair of conduit ducts (101)(101a). The double conduit duct (200) is connected to the pair of conduit ducts (101)(101a) by its first connection means.

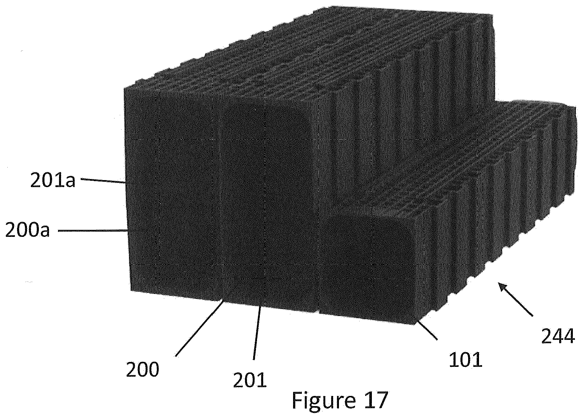

Referring to Figure 17, there is shown a perspective view of a third conduit ducting system (244), which comprises a pair of double conduit ducts (200)(200a) and a conduit duct (101). The first double conduit duct (200) is connected to the conduit duct (101) by its first connection means. The first double conduit duct (200) is connected to the second double conduit (200a) by its second connection means.

It will be appreciated that the second conduit ducting system (242) and the third conduit ducting system (244) are exemplary and that various combinations of conduit ducts are possible.

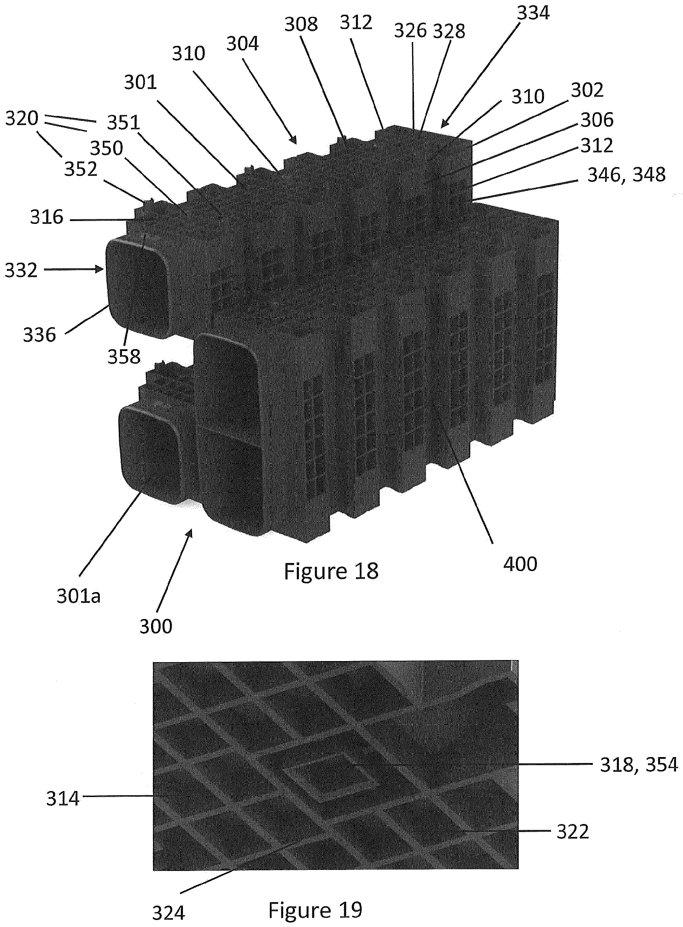

Referring to Figure 18, there is shown a perspective view of a fourth conduit ducting system (300). The conduit ducting system comprises a pair of conduit ducts (301)(301a) and a double conduit duct (400). The conduit ducts (301)(301a) comprise many of the same features as the conduit duct (101). Only the differences between the conduit duct (301)(301a) and the conduit duct (101) are described here.

Additionally, the double conduit duct (400) comprises many of the same features as the conduit ducts (301)(301a). The differences between the double conduit duct (400) and the conduit ducts (301)(301a) are the same as the differences between the double conduit duct (200) and the conduit duct (101). These differences are described above with respect to Figure 15.

Only the features of conduit duct (301) are indicated on Figure 18. However, it will be understood that conduit duct (301a) is identical to conduit duct (301), and that the double conduit duct (400) comprises many of the same features as the conduit duct (301).

Each of the pins (312) of the first connection means (306) and the second connection means (308) of the conduit duct (301) comprise leading faces (346). The leading face (346) of each pin (312) is substantially parallel to the first face (302) and the second face (304), and faces outwardly from the conduit duct (301).

Each leading face (346) comprises a series of cut-outs (348). The cut-outs (348) provide apertures in the leading faces (346) of the pins (312). The cut-outs (348) are substantially rectangular in shape. The cut-outs (348) are identical to each other in shape. The series of cut-outs (348) extends for two cut-outs (348) in the longitudinal direction. The series of cut-outs (348) extends for three cut-outs (248) in a direction perpendicular to the longitudinal direction and parallel to the leading face (346).

The fourth connection means (320) comprises a series of projections (350). The projections (350) are substantially cylindrical. The fourth connection means (320) comprises a series of first half projections (351). The first half projections (351) are located on the tails (310) of the first connection means (306). The fourth connection means (320) comprises a series of second half projections (352). The second half projections (352) are located on the pins (312) of the second connection means (308).

The first half projections (351) are located at the same longitudinal position as the second half projections (352). Each of the first half projections (351) has a substantially semi-cylindrical shape. Each of the second half projections (352) has a substantially semi-cylindrical shape.

The first half projections (351) are located at the same longitudinal position as the projections (350). A central axis of each projection (350) is offset laterally from an outermost point of each first half projection (351) by a distance substantially equal to half of the width of the conduit duct (301a). The central axis of each projection (350) is offset laterally from an outermost point of each second half projection (352) by a distance substantially equal to half of the width of the conduit duct (301a).

Referring to Figure 19, there is shown a close up perspective view of the third connection means (318). The third connection means (318) comprises a series of apertures (354). The apertures (354) are substantially square in cross-section. The apertures (354) are of dimensions such that they can receive a projection (350) of the fourth connection means (320).

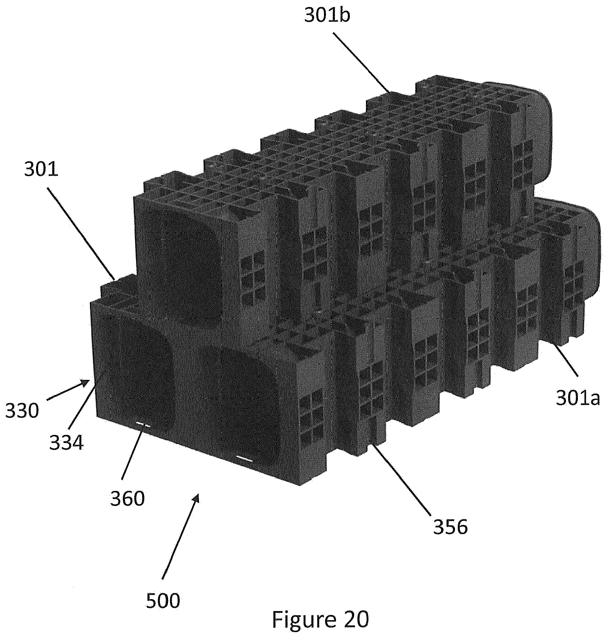

The third connection means (318) comprises a series of first notches (not shown). The first notches are located on the pins (312) of the first connection means (306). The third connection means (318) comprises a series of second notches ((356) in Figure 20). The second notches (356) are located on the tails (310) of the second connection means (308).

The first notches are located at the same longitudinal position as the second notches (356). Each of the first notches has a substantially cuboidal internal shape. Each of the second notches (356) has a substantially cuboidal internal shape.

The first notches are located at the same longitudinal position as the apertures (354). A central axis of each aperture (354) is offset laterally from an outermost point of each of the first notches by a distance substantially equal to half of the width of the conduit duct (301a). The central axis of each aperture (354) is offset laterally from an outermost point of each second notch (356) by a distance substantially equal to half of the width of the conduit duct (301a).

On connection of the conduit duct (301) to a pair of identical adjacent conduit ducts (not shown) by the first and second connection means (306)(308), further projections of the fourth connection means (320) are formed by the combined first half projections (351) and the second half projections (352) of the conduit ducts. Additionally, on connection of the conduit duct (301) to a pair of identical adjacent conduit ducts (not shown) by the first and second connection means (306)(308), further apertures of the third connection means (318) are formed by the combined first notches and second notches (356) of the conduit ducts.

As is show in Figure 18, the conduit duct (301) is connectable to the adjacent conduit duct (301a) by the third and fourth connection means (318)(320) so that the conduit duct (301) and the adjacent conduit duct (301a) are at the same lateral position. During such a connection, the apertures of the third connection means (318) receive the projections of the fourth connection means (320).

Referring to Figure 20, there is shown a fifth conduit ducting system (500) comprising three conduit ducts (301)(301a)(301b) (which are the same in the present embodiment) connected in a "trefoil" arrangement. In this arrangement, the first connection means of the conduit duct (301) connects to a second conduit duct (301a). As is explained above, the connection of the first conduit duct (301) to the second conduit duct (301a) by the first and second connection means forms further projections of the fourth connection means (320). The further projections of the fourth connection means (320) are received by the apertures of the third connection means of a third conduit duct (301b), thereby connecting the third conduit duct (301b) to the conduit duct (301) and the second conduit duct (301a). The third conduit duct (301b) is offset in a lateral direction from the conduit duct (301) by a first offset distance. The first offset distance is substantially equal to half of the width of the conduit duct. The third conduit duct (301b) is offset in a lateral direction from the second conduit duct (301a) by a second offset distance. The second offset distance is substantially equal to half of the width of the conduit ducts (301)(301a)(301b).

It will be appreciated that the fourth conduit ducting system (300) and the fifth conduit ducting system (500) are exemplary and that various combinations of conduit ducts (301) and double conduit ducts (400) are possible.

Referring again to Figure 18, the second end connector (336) comprises a pair of clips (358). The clips (358) are formed on outer surfaces of the spigot of the second end connector (336). The clips (358) are formed on opposing outer surfaces of the spigot. Each clip (358) comprises two raised portions, which extend outwardly from the outer surface of the spigot. The clips (358)_are angled, such that the outward extent of each clip (358) increases in the longitudinal direction away from the second end connector (336).

Referring again to Figure 20, the first end connector (334) comprises a pair of holes (360). The holes (360) are formed in a wall of the socket of the first end connector (334). The holes (360) are formed in opposing walls of the socket.

On connection of the conduit duct (301) to an adjacent conduit duct by the first end connector (334), the socket and spigot resiliently deform. The clips (358) of the conduit duct (301) are received by the holes of the adjacent conduit duct. This provides an interlocking connection between the conduit duct (301) and the adjacent conduit duct, which supplements the interference connection provided by the socket and spigot.

### List of Reference Numerals

- 1: Conduit ducting system
- 2a, 2b: Hemispherical casing component
- 4a, 4b, 4c, 4d: Connection means
- 6: Partitioning means
- 8: Casing duct
- 10a, 10b, 10c, 10d, 10e, 10f: Conduit duct
- 12a, 12b: Divider
- 14a, 14b: Spacer
- 20a, 20b: Spacer edge
- 22a, 22b: Divider groove
- 24a, 24b, 24c, 24d, 24e, 24f, 24g, 24h: Connection face
- 26: Casing aperture
- 28: Clip
- 30: Lip
- 32a, 32b, 32c, 32d: Spacer groove
- 34: Series of spacer apertures
- 36a, 36b, 36c, 36d: Series of teeth
- 37a, 37b: Tooth
- 38a, 38b: Leading face
- 39a, 39b, 39c, 39d: Longitudinally extending tooth edges
- 40a, 40b: Receiving face
- 44: Laterally extending ribs
- 46: Longitudinally extending ribs
- 48: Socket end
- 50: Spigot end
- 52a, 52b: Planar casing component
- 54: Third divider
- 56: Casing duct with oblong cross section
- 101, 101a, 101b, 101c: Conduit duct
- 102: First face
- 104: Second face
- 106: First connection means
- 108, 108a: Second connection means
- 110,110a: Tail
- 112, 112a: Pin
- 114: Third face
- 116, 116a: Fourth face
- 118: Third connection means
- 120: Fourth connection means
- 122: Longitudinal ribs of third face
- 124: Lateral ribs of third face
- 126: Longitudinal ribs of fourth face
- 128: Lateral ribs of fourth face
- 130, 130c: First end
- 132: Second end
- 134, 134c: First end connector
- 136: Second end connector
- 138: First conduit ducting system
- 200, 200a: Double conduit duct
- 201: Partitioning means
- 202: First face
- 204: Second face
- 206: First connection means
- 208: Second connection means
- 210: Tail
- 212: Pin
- 230: First end
- 232: Second end
- 234: First end connector
- 236: Second end connector
- 238: First duct
- 240: Second duct
- 242: Second conduit ducting system
- 244: Third conduit ducting system
- 300: Fourth conduit ducting system
- 301, 301a, 301b: Conduit duct
- 302: First face
- 304: Second face
- 306: First connection means
- 308: Second connection means
- 310: Tail
- 312: Pin
- 314: Third face
- 316: Fourth face
- 318: Third connection means
- 320: Fourth connection means
- 322: Longitudinal ribs of third face
- 324: Lateral ribs of third face
- 326: Longitudinal ribs of fourth face
- 328: Lateral ribs of fourth face
- 330: First end
- 332: Second end
- 334: First end connector
- 336: Second end connector
- 346: Leading face
- 348: Cut-out
- 350: Projection
- 351: First half projection
- 352: Second half projection
- 354: Aperture
- 356: Notch
- 358: Clip
- 360: Hole
- 400: Double conduit duct
- 500: Fifth conduit ducting system

## Claims

1. A conduit duct (101, 101a, 101b, 101c) comprising a first face (102) extending in a longitudinal direction and a second face (104) substantially parallel to and opposite the first face, wherein the first face has first connection means (106) and the second face has second connection means (108, 108a), the first connection means configured to interlock with second connection means (108a) of an identical adjacent conduit duct (101a),
wherein the first and second faces are substantially planar,
the first connection means being connectable to the second connection means of the adjacent conduit duct by sliding the conduit duct relative to the adjacent conduit duct in a sliding direction, the sliding direction parallel to the first face,
wherein the first connection means comprises a first series of dovetail connectors, and the second connection means comprises a second series of dovetail connectors, each of the first and second series of dovetail connectors comprising alternating pins (112, 112a) and tails (110, 110a), the connectors being complementary such that the pins of the first series are located at the same longitudinal position as the tails of the second series,
wherein the conduit duct further comprises a third face (114) extending in a longitudinal direction and a fourth face (116, 116a) substantially parallel to and opposite the third face, wherein the third face and the fourth face are substantially planar, and the third face and the fourth face are substantially perpendicular to the first face and the second face, and wherein the third face has third connection means (118) and the fourth face has fourth connection means (120), the fourth connection means configured to engage with third connection means of the adjacent conduit duct,
wherein the third and/or fourth face comprises a series of longitudinal ribs (122, 126) connected to a series of lateral ribs (124, 128), wherein the longitudinal ribs of the series of longitudinal ribs and the lateral ribs of the series of lateral ribs are connected and intersecting, and wherein the third and/or fourth connection means are formed by the longitudinal ribs,
wherein the fourth connection means comprises a pair of substantially rectangular longitudinally extending raised portions and the third connection means comprises a pair of recesses to receive the raised portions of the fourth connection means,
wherein the fourth connection means is formed within the longitudinal ribs and the lateral ribs and the third connection means is at the same longitudinal position as the fourth connection means.

2. The conduit duct according to claim 1, wherein each of the first and second series of dovetail connectors has a height substantially equal to a height of the first and second faces, the heights measured in a direction perpendicular to the longitudinal direction.

3. The conduit duct of claim 1 wherein the conduit duct is connectable to the adjacent conduit duct by the third and fourth connection means so that the conduit duct and the adjacent conduit duct are at the same lateral position.

4. The conduit duct of claim 3, wherein the conduit duct is connectable to the adjacent conduit duct by the third and fourth connection means so that the first and second connection means of the conduit duct are continuous with the first and second connection means of the adjacent conduit duct.

5. The conduit duct of any of claims 1 to 4, wherein the conduit duct is connectable to the adjacent conduit duct by the third and fourth connection means so that the conduit duct and the adjacent conduit duct are offset in a lateral direction by an offset distance, and wherein the fourth connection means comprises a series of projections (350), and the third connection means comprises a series of apertures (354) to receive the projections of the fourth connection means of the adjacent conduit duct.

6. The conduit duct of claim 5, wherein the fourth connection means (320) comprises at least one first half projection (351) located on at least one tail of the first connection means (306), and the fourth connection means comprises at least one second half projection (352) located on at least one pin of the second connection means (308), the at least one pin (312) of the second connection means being at the same longitudinal position as the at least one tail (310) of the first connection means (306), wherein on connection of the conduit duct to the adjacent conduit duct by the first and second connection means, at least one projection (350) of the fourth connection means is formed by the at least one first half projection (351) and the at least one second half projection (352).

7. The conduit duct of claim 6, wherein the third connection means (318) comprises at least one first notch (356) located on the at least one tail of the first connection means, and the third connection means comprises at least one second notch located on the at least one pin of the second connection means, wherein on connection of the conduit duct to the adjacent conduit duct by the first and second connection means, at least one aperture of the third connection means is formed by the at least one first notch and the at least one second notch.

8. The conduit duct of claim 7, wherein the fourth connection means comprises at least one projection at the same longitudinal position as the at least one tail and offset from the at least one first half projection by half of the width of the conduit duct, and the third connection means comprises at least one aperture at the same longitudinal position as the at least one tail and offset from the at least one first notch by half of the width of the conduit duct.

9. The conduit duct of any preceding claim, wherein the conduit duct comprises partitioning means (201) which divides the duct into two ducts, and the conduit duct is a double conduit duct (200, 200a), the partitioning means being substantially planar and parallel to the third (314) and fourth (316) faces.

10. The conduit duct of any preceding claim, comprising a first end (130, 130c) and a second end (132), the first end comprising a first end connector (134, 134c) in the form of a socket and the second end comprising a second end connector (136) in the form of a spigot, wherein the second end connector is receivable by a first end connector of the adjacent conduit duct.

## Patentansprüche

1. Leitungskanal (101, 101a, 101b, 101c), der eine erste Fläche (102), die sich in einer Längsrichtung erstreckt, und eine zweite Fläche (104), im Wesentlichen parallel und entgegengesetzt zu der ersten Fläche, umfasst, wobei die erste Fläche ein erstes Verbindungsmittel (106) aufweist und die zweite Fläche ein zweites Verbindungsmittel (108, 108a) aufweist, wobei das erste Verbindungsmittel dafür konfiguriert ist, sich mit dem zweiten Verbindungsmittel (108a) eines identischen benachbarten Leitungskanals (101a) zu verschränken,
wobei die erste und die zweite Fläche im Wesentlichen eben sind,
das erste Verbindungsmittel mit dem zweiten Verbindungsmittel des benachbarten Leitungskanals verbunden werden können durch Schieben des Leitungskanals im Verhältnis zu dem benachbarten Leitungskanal in einer Schieberichtung, wobei die Schieberichtung parallel zu der ersten Fläche ist,
wobei das erste Verbindungsmittel eine erste Reihe von Schwalbenschwanzverbindern umfasst und das zweite Verbindungsmittel eine zweite Reihe von Schwalbenschwanzverbindern umfasst, wobei jede der ersten und der zweiten Reihe von Schwalbenschwanzverbindern abwechselnde Zinken (112, 112a) und Schwänze (110, 110a) umfassen, wobei die Verbinder derart komplementär sind, dass die Zinken der ersten Reihe an derselben Längsposition angeordnet sind wie die Schwänze der zweiten Reihe,
wobei der Leitungskanal ferner eine dritte Fläche (114), die sich in einer Längsrichtung erstreckt, und eine vierte Fläche (116, 116A), im Wesentlichen parallel und entgegengesetzt zu der dritten Fläche, umfasst, wobei die dritte Fläche und die vierte Fläche im Wesentlichen eben sind und die dritte Fläche und die vierte Fläche im Wesentlichen senkrecht zu der ersten Fläche und der zweiten Fläche sind und wobei die dritte Fläche das dritte Verbindungsmittel (118) aufweist und die vierte Fläche das vierte Verbindungsmittel (120) aufweist, wobei das vierte Verbindungsmittel dafür konfiguriert ist, mit dem dritten Verbindungsmittel des benachbarten Leitungskanals ineinanderzugreifen,
wobei die dritte und/oder die vierte Fläche eine Reihe von Längsrippen (122, 126) umfassen, die mit einer Reihe von seitlichen Rippen (124, 128) verbunden sind, wobei die Längsrippen der Reihe von Längsrippen und die seitlichen Rippen der Reihe von seitlichen Rippen verbunden sind und einander schneiden und wobei das dritte und/oder das vierte Verbindungsmittel durch die Längsrippen gebildet werden,
wobei das vierte Verbindungsmittel ein Paar von im Wesentlichen rechteckigen sich in Längsrichtung erstreckenden erhöhten Abschnitten umfasst und das dritte Verbindungsmittel ein Paar von Aussparungen umfasst, um die erhöhten Abschnitte des vierten Verbindungsmittels aufzunehmen,
wobei das vierte Verbindungsmittel innerhalb der Längsrippen der seitlichen Rippen geformt ist und sich das dritte Verbindungsmittel an derselben Längsposition befindet wie das vierte Verbindungsmittel.

2. Leitungskanal nach Anspruch 1, wobei jeder von der ersten und der zweiten Reihe von Schwalbenschwanzverbindern eine Höhe, im Wesentlichen gleich einer Höhe der ersten und der zweiten Fläche, aufweist, wobei die Höhen in einer Richtung, senkrecht zu der Längsrichtung, gemessen werden.

3. Leitungskanal nach Anspruch 1, wobei der Leitungskanal durch das dritte und das vierte Verbindungsmittel so mit dem benachbarten Leitungskanal verbunden werden kann, dass sich der Leitungskanal und der benachbarte Leitungskanal an derselben seitlichen Position befinden.

4. Leitungskanal nach Anspruch 3, wobei der Leitungskanal durch das dritte und das vierte Verbindungsmittel so mit dem benachbarten Leitungskanal verbunden werden kann, dass das erste und das zweite Verbindungsmittel des Leitungskanals mit dem ersten und dem zweiten Verbindungsmittel des benachbarten Leitungskanals zusammenhängend sind.

5. Leitungskanal nach einem der Ansprüche 1 bis 4, wobei der Leitungskanal durch das dritte und das vierte Verbindungsmittel so mit dem benachbarten Leitungskanal verbunden werden kann, dass der Leitungskanal und der benachbarte Leitungskanal in einer seitlichen Richtung um eine Versatzstrecke versetzt sind, und wobei das vierte Verbindungsmittel eine Reihe von Vorsprüngen (350) umfasst und das dritte Verbindungsmittel eine Reihe von Öffnungen (354) umfasst, um die Vorsprünge des vierten Verbindungsmittels des benachbarten Leitungskanals aufzunehmen.

6. Leitungskanal nach Anspruch 5, wobei das vierte Verbindungsmittel (320) mindestens einen ersten halben Vorsprung (351) umfasst, der an mindestens einem Schwanz des ersten Verbindungsmittels (306) angeordnet ist, und das vierte Verbindungsmittel mindestens einen zweiten halben Vorsprung (352) umfasst, der an mindestens einem Zinken des zweiten Verbindungsmittels (308) angeordnet ist, wobei sich der mindestens eine Zinken (312) des zweiten Verbindungsmittels an derselben Längsposition befindet wie der mindestens eine Schwanz (310) des ersten Verbindungsmittels (306), wobei auf eine Verbindung des Leitungskanals mit dem benachbarten Leitungskanal durch das erste und das zweite Verbindungsmittel hin mindestens ein Vorsprung (350) des vierten Verbindungsmittels durch den mindestens einen ersten halben Vorsprung (351) und den mindestens einen zweiten halben Vorsprung (352) gebildet wird.

7. Leitungskanal nach Anspruch 6, wobei das dritte Verbindungsmittel (318) mindestens eine erste Kerbe (356), die an dem mindestens einen Schwanz des ersten Verbindungsmittels angeordnet ist, umfasst und das dritte Verbindungsmittel mindestens eine zweite Kerbe, die an dem mindestens einen Zinken des zweiten Verbindungsmittels angeordnet ist, umfasst, wobei auf eine Verbindung des Leitungskanals mit dem benachbarten Leitungskanal durch das erste und das zweite Verbindungsmittel hin mindestens eine Öffnung des dritten Verbindungsmittels durch die mindestens eine erste Kerbe und die mindestens eine zweite Kerbe gebildet wird.

8. Leitungskanal nach Anspruch 7, wobei das vierte Verbindungsmittel mindestens einen Vorsprung an derselben Längsposition wie der mindestens eine Schwanz und versetzt von dem mindestens einen ersten halben Vorsprung um die halbe Breite des Leitungskanals, umfasst und das dritte Verbindungsmittel mindestens eine Öffnung an derselben Längsposition wie der mindestens eine Schwanz und versetzt von der mindestens einen ersten Kerbe um die halbe Breite des Leitungskanals, umfasst.

9. Leitungskanal nach einem der vorhergehenden Ansprüche, wobei der Leitungskanal ein Unterteilungsmittel (201) umfasst, das den Kanal in zwei Kanäle teilt, und der Leitungskanal ein doppelter Leitungskanal (200, 200a) ist, wobei das Unterteilungsmittel im Wesentlichen eben und parallel zu der dritten (314) und der vierten (316) Fläche ist.

10. Leitungskanal nach einem der vorhergehenden Ansprüche, der ein erstes Ende (130, 130c) und ein zweites Ende (132) umfasst, wobei das erste Ende einen ersten Endverbinder (134, 134c) in der Form einer Buchse umfasst und das zweite Ende einen zweiten Endverbinder (136) in der Form eines Zapfens umfasst, wobei der zweite Endverbinder durch einen ersten Endverbinder des benachbarten Leitungskanals aufgenommen werden kann.

## Revendications

1. Conduit (101, 101a, 101b, 101c) comprenant une première face (102) s'étendant dans une direction longitudinale et une deuxième face (104) sensiblement parallèle et opposée à la première face, dans lequel la première face comporte un premier moyen de connexion (106) et la deuxième face comporte un deuxième moyen de connexion (108, 108a), le premier moyen de connexion étant configuré pour s'emboîter avec le deuxième moyen de connexion (108a) d'un conduit adjacent identique (101a),
dans lequel les première et deuxième faces sont sensiblement planes ;
le premier moyen de connexion pouvant être connecté au deuxième moyen de connexion du conduit adjacent en faisant glisser le conduit par rapport au conduit adjacent dans une direction de glissement, la direction de glissement étant parallèle à la première face,
dans lequel le premier moyen de connexion comprend une première série de connecteurs à queue-d'aronde, et le deuxième moyen de connexion comprend une seconde série de connecteurs à queue-d'aronde, chaque série des première et seconde séries de connecteurs à queue-d'aronde comprenant des broches (112, 112a) et des queues (110, 110a) en alternance, les connecteurs étant complémentaires de sorte que les broches de la première série sont localisées à la même position longitudinale que les queues de la seconde série,
dans lequel le conduit comprend en outre une troisième face (114) s'étendant dans une direction longitudinale et une quatrième face (116, 116a) sensiblement parallèle et opposée à la troisième face, dans lequel la troisième face et la quatrième face sont sensiblement planes, et la troisième face et la quatrième face sont sensiblement perpendiculaires à la première face et à la deuxième face, dans lequel la troisième face comporte un troisième moyen de connexion (118) et la quatrième face comporte un quatrième moyen de connexion (120), le quatrième moyen de connexion étant configuré pour être engagé avec le troisième moyen de connexion du conduit adjacent,
dans lequel la troisième face et/ou la quatrième face comprennent/comprend une série de nervures longitudinales (122, 126) connectées à une série de nervures latérales (124, 128), dans lequel les nervures longitudinales de la série de nervures longitudinales et les nervures latérales de la série de nervures latérales sont connectées et s'intersectent, et dans lequel le troisième moyen de connexion et/ou le quatrième moyen de connexion sont/est formé(s) par les nervures longitudinales,
dans lequel le quatrième moyen de connexion comprend une paire de parties relevées s'étendant longitudinalement sensiblement rectangulaires et le troisième moyen de connexion comprend une paire d'évidements pour recevoir les parties relevées du quatrième moyen de connexion,
dans lequel le quatrième moyen de connexion est formé à l'intérieur des nervures longitudinales et des nervures latérales et le troisième moyen de connexion est à la même position longitudinale que le quatrième moyen de connexion.

2. Conduit selon la revendication 1, dans lequel chacune des première et seconde séries de connecteurs à queue-d'aronde présente une hauteur sensiblement égale à une hauteur des première et deuxième faces, les hauteurs étant mesurées dans une direction perpendiculaire à la direction longitudinale.

3. Conduit selon la revendication 1, dans lequel le conduit peut être connecté au conduit adjacent au moyen des troisième et quatrième moyens de connexion de sorte que le conduit et le conduit adjacent sont à la même position latérale.

4. Conduit selon la revendication 3, dans lequel le conduit peut être connecté au conduit adjacent au moyen des troisième et quatrième moyens de connexion de sorte que les premier et deuxième moyens de connexion du conduit sont continus avec les premier et deuxième moyens de connexion du conduit adjacent.

5. Conduit selon l'une quelconque des revendications 1 à 4, dans lequel le conduit peut être connecté au conduit adjacent au moyen des troisième et quatrième moyens de connexion de sorte que le conduit et le conduit adjacent sont décalés dans une direction latérale d'une distance de décalage, et dans lequel le quatrième moyen de connexion comprend une série de projections (350), et le troisième moyen de connexion comprend une série d'ouvertures (354) pour recevoir les projections du quatrième moyen de connexion du conduit adjacent.

6. Conduit selon la revendication 5, dans lequel le quatrième moyen de connexion (320) comprend au moins une première demi-projection (351) localisée sur au moins une queue du premier moyen de connexion (306), et le quatrième moyen de connexion comprend au moins une seconde demi-projection (352) localisée sur au moins une broche du deuxième moyen de connexion (308), l'au moins une broche (312) du deuxième moyen de connexion étant à la même position longitudinale que l'au moins une queue (310) du premier moyen de connexion (306), dans lequel, lors d'une connexion du conduit sur le conduit adjacent au moyen des premier et deuxième moyens de connexion, au moins une projection (350) du quatrième moyen de connexion est formée par l'au moins une première demi-projection (351) et l'au moins une seconde demi-projection (352).

7. Conduit selon la revendication 6, dans lequel le troisième moyen de connexion (318) comprend au moins une première encoche (356) localisée sur l'au moins une queue du premier moyen de connexion, et le troisième moyen de connexion comprend au moins une seconde encoche localisée sur l'au moins une broche du deuxième moyen de connexion, dans lequel, lors de la connexion du conduit sur le conduit adjacent au moyen des premier et deuxième moyens de connexion, au moins une ouverture du troisième moyen de connexion est formée par l'au moins une première encoche et l'au moins une seconde encoche.

8. Conduit selon la revendication 7, dans lequel le quatrième moyen de connexion comprend au moins une projection à la même position longitudinale que l'au moins une queue et décalée par rapport à l'au moins une première demi-projection de la moitié de la largeur du conduit, et le troisième moyen de connexion comprend au moins une ouverture à la même position longitudinale que l'au moins une queue et décalée par rapport à l'au moins une première encoche de la moitié de la largeur du conduit.

9. Conduit selon l'une quelconque des revendications précédentes, dans lequel le conduit comprend un moyen de partitionnement (201) qui divise le conduit en deux conduits, et le conduit est un conduit double (200, 200a), le moyen de partitionnement étant sensiblement plan et parallèle aux troisième (314) et quatrième (316) faces.

10. Conduit selon l'une quelconque des revendications précédentes, comprenant une première extrémité (130, 130c) et une seconde extrémité (132), la première extrémité comprenant un premier connecteur d'extrémité (134, 134c) sous la forme d'une douille et la seconde extrémité comprenant un second connecteur d'extrémité (136) sous la forme d'une broche mâle, dans lequel le second connecteur d'extrémité peut être reçu par un premier connecteur d'extrémité du conduit adjacent.
